# EUROPEAN PATENT APPLICATION

(11) **EP 1 298 888 A1**
(43) Date of publication of application: **02.04.2003**
(21) Application number: 01203688.5
(22) Date of filing: 28.09.2001
(51) Int. Cl.: H04M 1/02

(54) **A portable communication terminal**

(71) Applicant: Telefonaktiebolaget L M Ericsson (Publ), 126 25 Stockholm (SE)
(72) Inventor: Brunström, Leif, 175 47 Järfälla (SE); Persson, Thomas, 172 63 Sundbyberg (SE); Munther, Stefan, 168 38 Bromma (SE); Göjeryd, Anna, 165 32 Tyresö (SE)
(74) Representative: Stein, Jan Anders Lennart

(57) **Abstract**

The invention relates to a portable communication terminal (1) comprising a base part (5), a display screen (6) located on the base part (5) and a movable part (7), comprising a keypad (8) for a first set of functions of the portable communication terminal (1). The movable part (7) is connected to the base part (5) and is adapted to undergo a movement in relation to the latter, at which the movement is limited between a closed position and an open position. The movable part (7) is adapted to, at the closed position, cover at lcast a part of the display screen (6), which is touch sensitive for a second set of functions of the portable communication terminal (1). The movement that the movable part (7) is adapted to undergo is a sliding movement within a plane being essentially parallel to the display screen (6). The movable part (7) is adapted so that, as it is moved towards the open position, the area of the display screen (6) covered by the movable part (7) decreases.

## Description

### TECHNICAL FIELD OF THE INVENTION

The present invention relates to a portable communication terminal having a keypad for a first set of functions of the portable communication terminal and touch sensitive display screen for a second set of functions of the portable communication terminal.

### DESCRIPTION OF RELATED ART

Some models of mobile telephones disclosed in prior art provide the possibility to use the same unit for mobile telephone communication, and for editing text messages using an alphabetic keyboard.

US5189632 discloses a portable computer telephone on which a keyboard member having a keypad for controlling telephone functions is hinged to the rest of the body, and movable between a closed and open position in relation to the latter. In the closed position the keyboard member covers a part of a display screen located on the rest of the body, at which the visible part of the display screen is used in connection to the operation of the keypad. In the open position an alphabetic keyboard on the keyboard member, located on the opposite side of the latter in relation to the keypad, is exposed. The alphabetic keyboard can then be used in connection with the fully visible display screen. A problem with this design is that the keypad is not usable in the open position of the keyboard member, since it is then located on the side of the keyboard member that is faced away from the user. This means that entries made using the keypad cannot be done or has to be done with alternative means when the unit is in the open position.

The mobile telephone model R380 by Ericsson has a keypad located on a member which is hinged to the rest of the mobile telephone body. In a closed position the member covers a part of a touch sensitive display screen, and the keypad is available for use. In an open position of the member the touch screen is fully exposed and entries can be done on the latter, but the keypad can not be used since the member is rotated so that the keypad is facing away from the user.

US6128475 discloses a wireless telephone having a slidable extension with a keyboard. The telephone does not have any alphabetic keyboard for entering text messages.

### SUMMARY

It is an object of the present invention to provide a portable communication terminal which can be used for mobile telephone communication, and for editing text messages using an alphabetic keyboard, but which is easier to use compared to such portable communication terminals according to prior art.

It is another object of the present invention to provide a portable communication terminal which can be used for mobile telephone communication, and for editing text messages using an alphabetic keyboard, which allows for more effective use of the control means thereof, in comparison to such portable communication terminals according to prior art.

The object is met by a portable communication terminal comprising a base part, a display screen located on the base part and a movable part, comprising a keypad for a first set of functions of the portable communication terminal, whereby the movable part is connected to the base part and is adapted to undergo a movement in relation to the latter, at which the movement of the movable part is limited between a closed position and an open position, the movable part being adapted to, at the closed position, cover at least a part of the display screen, the display screen being touch sensitive for user control of a second set of functions of the portable communication terminal, characterized in that the movement that the movable part is adapted to undergo is a sliding movement within a plane being essentially parallel to the display screen, in that the movable part is adapted so that, as it is moved towards the open position, the area of the display screen covered by the movable part decreases, and in that the movable part is adapted to be electrically connected to the base part in at least two positions of the movable part in relation to the base part.

By having the keypad for functions of the portable telephone located on the movable part, which is slidably connected to the base part, the keypad can be used together with the screen in any position thereof. Therefore no backup control means are necessary to replace the keypad when the screen is fully exposed. This does not only reduce the complexity of the terminal but it also makes the operation thereof easier for the user.

In other words, the first set of control functions can be accessed through the keypad in the closed position and also in the open position of the movable part, whereby a complementary set of functions are available through the display screen together with the keypad functions, in the open position of the movable part.

Preferably the portable communication terminal has an extended shape whereby the movement that the movable part is adapted to undergo is parallel to the longitudinal axis of the portable communication terminal. This provides for the terminal to be operated by one hand for both sets of functions in the open position of the movable part.

Preferably the first set of functions comprises entries of numerical values and control of speech connections. This provides for the use of the same control buttons for speech connection operations in both the closed and open position of the movable part.

### BRIEF DESCRIPTION OF THE DRAWINGS

The invention will now be described in greater detail, with the aid of the accompanying drawings, on which
- fig. 1 shows a front view of a portable communication terminal according to one embodiment of the invention,
- fig. 2 shows a side view of the portable communication terminal in fig. 1,
- fig. 3 shows a front view of the portable communication terminal in fig. 1,
- fig. 4 shows a side view of the portable communication terminal in fig. 1,
- fig. 5 shows a front view of a portable communication terminal according to another embodiment of the invention,
- fig. 6 shows a side view of a portable communication terminal according to yet another embodiment of the invention,
- fig. 7 shows a front view of a portable communication terminal according to a further embodiment of the invention, and
- fig. 8 shows another front view of the portable communication terminal in fig. 7.

### DETAILED DESCRIPTION

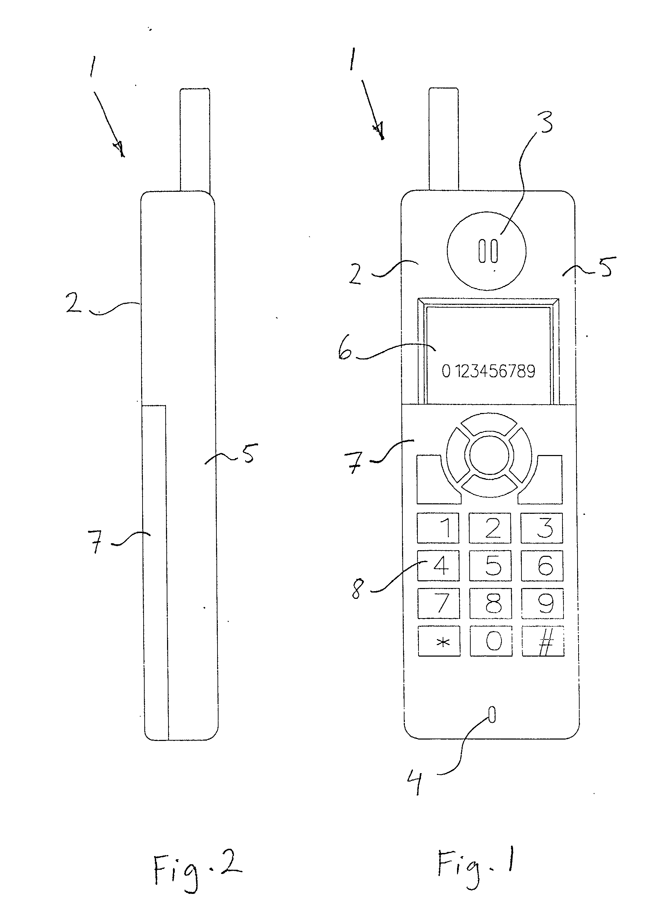

Fig. 1 and 2 show a portable communication terminal 1. At a front face 2 a speaker 3 and a microphone 4 are located. Alternatively the speaker 3 and/or microphone 4 could be located at some other face of the terminal 1.

The terminal 1 has an extended shape and comprises a base part 5 on which a display screen 6 is located. The base part 5 comprises radio electronic circuits and an antenna for transmission and reception of communication signals. Fig. 1 shows the antenna as protruding from the rest of the terminal, but of course a built in antenna can also be arranged. Preferably the display screen is parallel to and positioned by the front face 2 of the terminal 1. A movable part 7 has an essentially planar shape and is oriented essentially parallel to the display screen 6. It comprises a keypad 8 for a first set of functions of the terminal 1. The first set of functions comprises and controls of speech connections whereby the keypad 8 comprises buttons for entries of numerical values for e.g. dialing a telephone number.

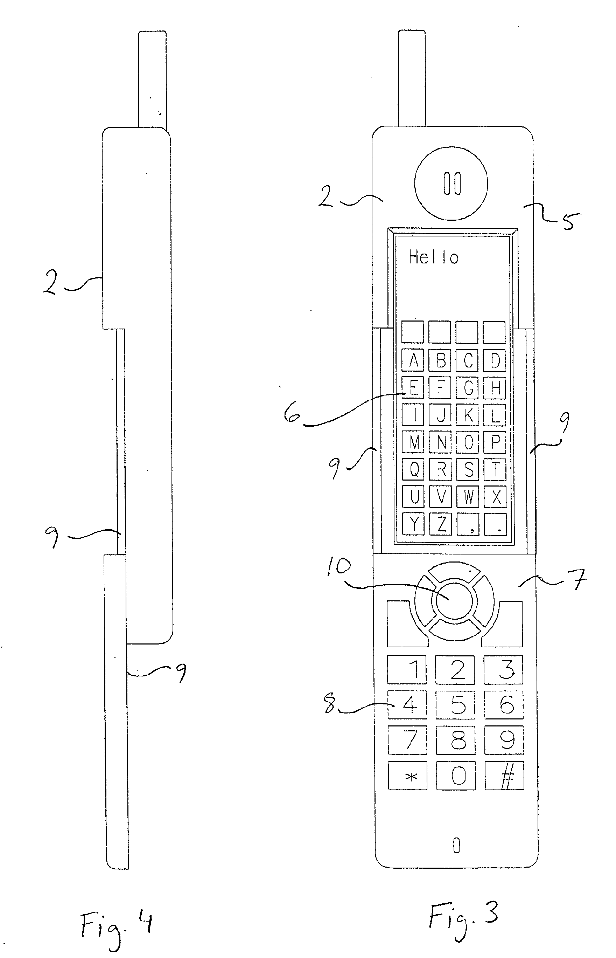

As can be seen in fig. 3 and 4 the movable part 7 is connected to the base part 5 and is slidable in relation to the latter. Thereby the movable part 7 can be moved essentially in its plane and essentially in a direction defined by a longitudinal axis of the terminal 1. The movement of the movable part 7 is substantially a pure translation, i.e. no rotational component is present.

The movement of the movable part is obtained with the use of guide means 9, located on the movable part 7 and the base part 5, on both sides of the front face 2 of the terminal 1. The guide means 9 extend in the direction of the movement of the movable part 7. The guide means 9, which can be in the form of rails, are arranged to, by means of internal engagement, guide the movement of the movable part 7 between a closed position and an open position. In fig. 1 and 2 the movable part is shown in the closed position and in fig. 3 and 4 it is shown in the open position. The guide means 9 are arranged so that signals from the keypad 8 on the movable part 7 can be transmitted through the guide means. Thus, the guide means 9 are electrically conductive and provide two leads for currents, one on either side of the front face 2.

As is known to the person skilled in the art, the connections to the buttons of the keypad 8 could be arranged so that each button correspond to a specific voltage level of the connection between the movable part 7 and the base part 5. Alternatively a circuit on the movable part could be adapted to receive signals from all buttons in the keypad, and send signals through the interface between the two parts 5, 7 corresponding to the individual buttons.

The guide means 9 can comprise two rails, located on the base part 5 on each side of the display screen 6. Two rails, each adapted to co-act with one of the rails on the base part 5, can be located along the sides of the movable part. Instead of rails, shoes, suitable to engage a guide rail or the like, can be used.

The interface between the base part 5 and the movable part 7 is adapted so that signals from the keypad 8 can be transferred to the base part 5 in any position of the movable part 7. To conduct signals from the keypad 8 on the movable part 7 the guide means 9 can be made in or be covered by a conductive material, such as copper. In a special embodiment parts of the guide means 9 are formed by the sides of the glass of the display screen 6. Thereby the sides of the display glass are exposed in the mounted condition of the screen 6, and copper plated to form conductive rails co-acting with rails or shoes on the movable part.

Alternatively, means for conducting the signals from the movable part to the base part can be provided separate from the guide means 9, for example in the form of cables or flex films that are flexible to adjust their position according to any position of the movable part 7.

As can be seen in fig. 3 the display screen 6 has an extended shape, and is extended in the longitudinal direction of the terminal 1. In the closed position (shown in fig. 1) the movable part 7 is adapted to cover at least a part of the display screen 6. Thereby information normally displayed when the terminal is used for speech connections is displayed on the visible part of the screen 6.

As the movable part is moved towards the open position, the area of the display screen covered by the movable part decreases. The display screen is touch sensitive and can be used to display a set of touch screen control buttons forming an alphabetic keyboard. Thus the display screen 6 can be used to control a second set of functions, which can comprise entries of alphabetical symbols and editing text messages, to be sent, e.g. as e-mails or SMS-messages.

As can be seen in fig. 3 the keypad 8 comprises a navigation button set 10 comprising five control buttons for navigation on the display screen 6 is provided on the movable part 7. This means that navigation functions can be operated by one hand in the open position of the movable part 7 as well as in the closed position thereof.

According to an alternative embodiment of the invention the terminal 1 is fully operable in any position of the movable part 7, between the closed and open position, whereby an infinite amount of screen areas can be visible. Alternative the movable part 7 can be adapted to be positioned in a limited number of locations between the closed and open position. This allows the user to choose the amount of visible screen area from at least three alternatives.

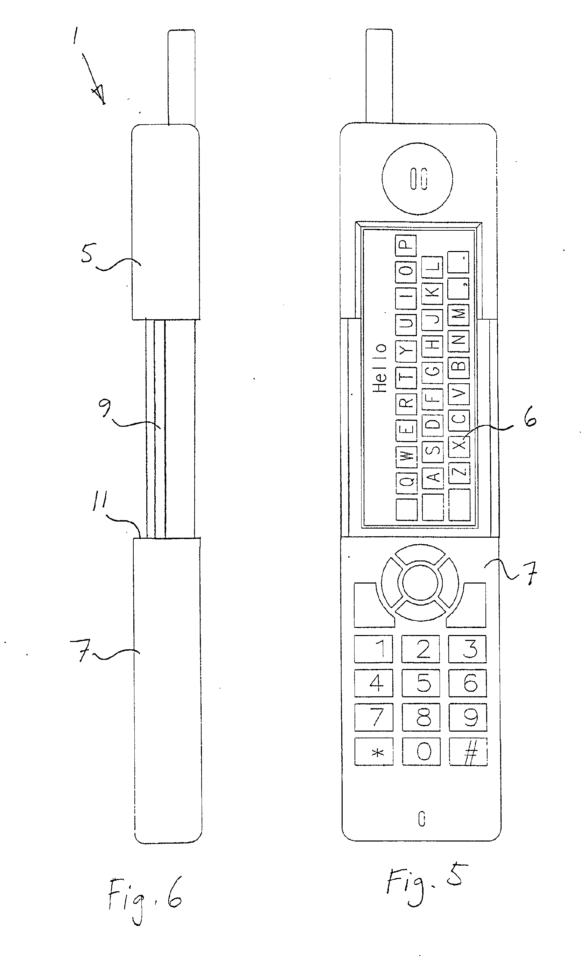

As can be seen in fig. 5, in the open position of the movable part 7 the touch controls and information can be presented in a landscape mode on the display screen 6. This provides for an alphabetic keyboard to be displayed in a manner that makes editing of messages and documents easier for the user. The alphabetic keyboard can be displayed similarly to the arrangement on a traditional type writing machine. The display screen 6 could be in portrait mode in the closed position of the movable part 7 (as shown in fig. 1) and be adapted to shift automatically to a landscape mode when the movable part is slid into the open position. The terminal could also be adapted so that the user could control shifts between portrait and landscape modes in the open position of the movable part 7.

Fig. 6 shows an embodiment of the invention which is similar to the embodiments described above, but it presents a movable part 7 having the shape of a case which has an opening 11 in one end. At the opening 11 the base part 5 can be moved in and out of the movable part 7 between a closed and open position, respectively, of the movable part 7, at which guide means 9 could be provided on the exterior sides of the base part 5 and on the interior of the movable part 7. Thus, the movable part 7 presents a closed tube-like cross-section. This makes holding the terminal 1 more comfortable in the open position of the movable part 7, since it provides a smooth back face all the way to the free end of the movable part 7. Alternatively, the movable part can present an open cross-section, which partly surrounds the cross-section of the base part 5.

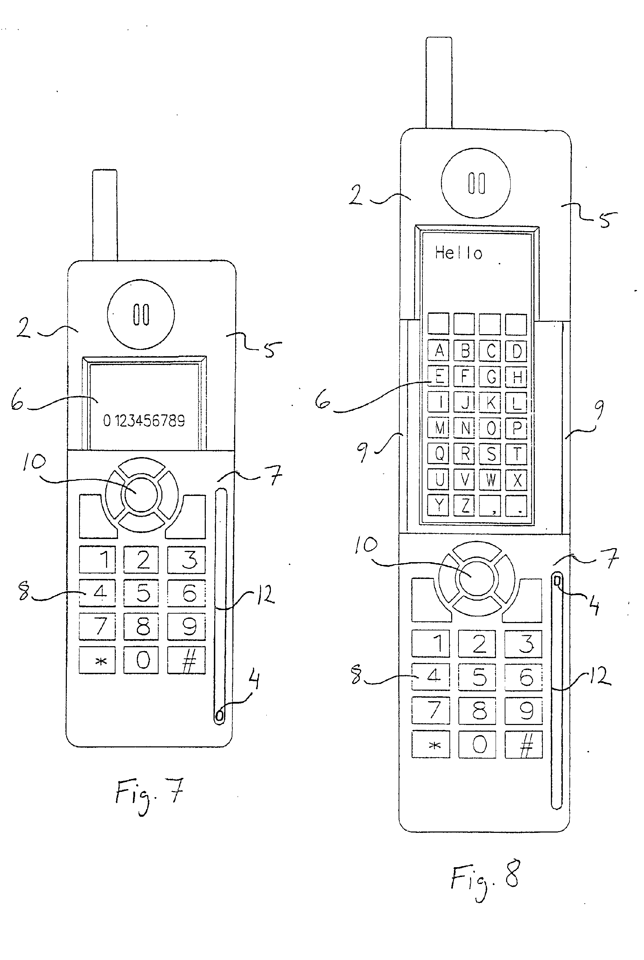

In the embodiments described above the microphone 4 is mounted on the movable part 7. Fig. 7 and 8 shows an embodiment in which a microphone 4 is located on the base part 5 and behind the movable part 7. For using the microphone in all positions of the movable part 7, the latter is provided with a slot 12 extending in the direction of movement of the movable part 7. The slot 12 provides for the microphone 4 to be exposed in any position of the movable part 7. In turn, this provides for a less complicated terminal 1 since signals from the microphone does not have to be conducted through the interface between the base part 5 and the movable part 7. Alternatively the movable part could be provided with holes, the number and locations of which correspond to positions that the movable part 7 is adapted to take.

## Claims

1. A portable communication terminal (1) comprising a base part (5), a display screen (6) located on the base part (5) and a movable part (7), comprising a keypad (8) for a first set of functions of the portable communication terminal (1), whereby the movable part (7) is connected to the base part (5) and is adapted to undergo a movement in relation to the latter, at which the movement of the movable part (7) is limited between a closed position and an open position, the movable part (7) being adapted to, at the closed position, cover at least a part of the display screen (6), the display screen (6) being touch sensitive for user control of a second set of functions of the portable communication terminal (1), **characterized in that** the movement that the movable part (7) is adapted to undergo is a sliding movement in a direction essentially parallel to the display screen (6), **in that** the movable part (7) is adapted so that, as it is moved towards the open position, the area of the display screen (6) covered by the movable part (7) decreases, and **in that** the movable part (7) is adapted to be electrically connected to the base part (5) in at least two positions of the movable part (7) in relation to the base part (5).

2. A portable communication terminal (1) according to claim 1, having an extended shape, whereby the movement that the movable part (7) is adapted to undergo is parallel to the longitudinal axis of the portable communication terminal (1).

3. A portable communication terminal (1) according to any of the preceding claims, whereby the first set of functions comprises entries of numerical values.

4. A portable communication terminal (1) according to any of the preceding claims, whereby the first set of functions comprises control of speech connections.

5. A portable communication terminal (1) according to any of the preceding claims, whereby the first set of functions comprises navigation on the display screen (6).

6. A portable communication terminal (1) according to any of the preceding claims, whereby the movable part (7) is adapted to be positioned in at least one location between the closed and open position.

7. A portable communication terminal (1) according to any of the preceding claims, whereby the movable part (7) presents a closed cross-section and is adapted to surround at least a part of the cross-section of the base part (5).

8. A portable communication terminal (1) according to any of the preceding claims, whereby a microphone (4) for telephone operations of the terminal (1) is located on the base part (5) in a region of the movable part (7), and the movable part (7) is provided with at least one aperture (12) adapted to expose the microphone (4) by at least two positions of the movable part (7).

9. A portable communication terminal (1) according to any of the preceding claims, whereby the display screen (6) is adapted to display a keyboard in the open position of the movable part (7).
